# EUROPEAN PATENT APPLICATION

(11) **EP 3 680 799 A1**
(43) Date of publication of application: **15.07.2020**
(21) Application number: 20150846.2
(22) Date of filing: 09.01.2020
(51) Int. Cl.: G06F 21/62

(54) **METHOD FOR COLLECTING AND MANAGING EVENT DATA OF A VEHICLE**

(30) Priority: 09.01.2019 KR 20190002567
(71) Applicant: HYUNDAI MOTOR COMPANY, Seoul 06797 (KR); Kia Motors Corporation, Seoul 06797 (KR)
(72) Inventor: RYU, Jung Hei, 18280 Hwaseong-si, Gyeonggi-do (KR); PARK, Seung Wook, 16803 Yongin-si, Gyeonggi-do (KR); LIM, Wha Pyeong, 13608 Seongnam-si, Gyeonggi-do (KR)
(74) Representative: Viering, Jentschura & Partner mbB Patent- und Rechtsanwälte

(57) **Abstract**

A method for collecting and managing event data of a vehicle can be performed by one or more computing systems. The method includes receiving an event report message from the vehicle. The event report message contains vehicle identifiable information and event data recorded in the vehicle. The method also includes generating a pseudonymous identifier based on the vehicle identifiable information, associating the event data with the pseudonymous identifier, transmitting the event data to a first database server for storage in a first database, and transmitting the vehicle identifiable information to a second database server for storage in a second database.

## Description

### TECHNICAL FIELD

The present disclosure relates to a method and system for collecting and managing event data of a vehicle.

### BACKGROUND

The statements in this section merely provide background information related to the present disclosure and may not constitute prior art.

In general, an event data recorder (EDR) is configured to detect an accident or the like and store information about a driving state of a vehicle or an operation by a driver within a predetermined period from a time before the corresponding time to a time after the corresponding time. At least several parameters, including speed, seat belt status and airbag inflation status, are stored such that they may be retrieved in a forensic investigation.

The forensic investigation is generally performed by reading data through an OBD-II port or by physically extracting the data memory of the EDR. The data in the EDR may be damaged or altered due to incorrect reading techniques, or may be maliciously manipulated or deleted after being stored. Accordingly, it may be difficult to perfectly ensure integrity of the stored data.

In investigating the situation surrounding a traffic event (e.g., a traffic accident), investigators from government agencies or private organizations, such as insurance companies and car manufacturers, identify and track specific data sources (e.g., vehicles involved in an accident), and then independently collect the information they need from each data source to identify the causes of the accident, defects, exacerbations, and mitigations. Such information may include data in the EDR. Unfortunately, collecting information in this manner may take lots of time and effort. Moreover, some data sources may be unidentified, may be no longer available at the time they are identified, or may have already been deleted. Therefore, there is a need for a system and related method for collecting and storing data that is in an EDR of a vehicle so as to automatically identify a data source having data relating to a traffic event and acquire such data in a timely manner.

### SUMMARY

A cloud storage or remote server maybe a secure space that may prevent unauthorized access and prevent data corruption. That is, in order to maintain the integrity of the EDR data, it may be considered to store the EDR data in a reliable cloud storage. However, to store EDR data in the cloud storage, measures to protect the privacy of individuals needs to be considered as well. In this context, the present disclosure proposes a cloud-based EDR data management system that may protect the privacy of individuals.

Embodiments relate to a method and system for collecting and managing event data of a vehicle or multiple vehicles. Embodiments can relate to a method and system for managing EDR data in a cloud-based manner.

In accordance with one aspect of the present invention, a method for collecting and managing event data of a vehicle can be performed by one or more computing systems. The method includes receiving an event report message from a vehicle. The event report message contains vehicle identifiable information and event data recorded in the vehicle. The method also includes generating a pseudonymous identifier based on the vehicle identifiable information, associating the event data with the pseudonymous identifier, storing the event data in a first database, and storing the vehicle identifiable information in a second database.

Embodiments of the method may further include one or more of the following features.

In some embodiments, the pseudonymous identifier may be generated by applying a one-way hash algorithm to the vehicle identifiable information.

In some embodiments, the pseudonymous identifier may be generated by applying a one-way hash algorithm to the vehicle identifiable information and a random number. The random number may be associated with the vehicle identifiable information and stored in the second database, or may be managed independently of the first database and the second database.

In some embodiments, the pseudonymous identifier is generated by applying a one-way hash algorithm to a VII index. Herein, the VII index may be used to uniquely identify the vehicle identifiable information in the second database.

In some embodiments, the event report message may further contain additional information about at least one of a geographical location, date, and time of an event. The additional information may be stored in the first database or the second database.

In some embodiments, the first database and the second database may be managed by different operators.

In accordance with another aspect of the present disclosure, a system can be used for collecting and managing event data of a vehicle. The system includes a first database, a first database server configured to manage the first database, a second database, a second database server configured to manage the second database, and a data collection server communicatively coupled to the first database server and the second database server,

Embodiments of the system may further include one or more of the following features.

The data collection server may receive an event report message from a vehicle. The event report message may contain vehicle identifiable information and event data recorded in the vehicle. The data collection server may generate a pseudonymous identifier based on the vehicle identifiable information.

The first database server may be configured to associate the event data with the pseudonymous identifier and store the event data in a first database, and the second database server may be configured to store the vehicle identifiable information in a second database.

In some embodiments, the data collection server may be configured to generate the pseudonymous identifier by applying a one-way hash algorithm to the vehicle identifiable information.

In some embodiments, the data collection server may be configured to generate the pseudonymous identifier by applying a one-way hash algorithm to the vehicle identifiable information and a random number. The data collection server may be configured to securely store the random number therein. Alternatively, the data collection server may be configured to provide the random number to the second database server such that the random number is associated with the vehicle identifiable information and stored in the second database.

In some embodiments, the data collection server may be configured to generate the pseudonymous identifier by applying a one-way hash algorithm to a VII index, wherein the VII index may be used to uniquely identify the vehicle identifiable information in the second database.

In some embodiments, the event report message may further contain additional information about at least one of a geographical location, date, and time of an event, wherein the additional information may be stored in the first database or the second database.

In some embodiments, at least some of the data collection server, the first database server, and the second database server may be operated by different operators.

According to embodiments of the proposed method and system, event data recorded in each vehicle is stored and managed in a database on a network. For personal privacy protection, vehicle identification information, which allows a third party to identify or track a related vehicle, is separated from the event data. The separated vehicle identification information and the event data are each managed in different databases. No database stores event data and vehicle identification information related thereto together. Thus, privacy of individuals may be protected. Furthermore, by applying different access authorization policies to the respective databases, protection of privacy of individuals may be further enhanced.

Further, according to embodiments of the proposed method and system, data (e.g., EDR data) about an event of interest may be easily obtained in a timely manner by searching a database on a network where event data is stored. In addition, the event data stored in a storage on a reliable network may be useful for forensic investigations where the integrity of event data is required.

### BRIEF DESCRIPTION OF THE DRAWINGS

FIG. 1 is a diagram illustrating an entire system for storing and managing event data in a cloud-based manner according to an embodiment of the present disclosure.
FIG. 2 is a flowchart illustrating an event data collection process of the system shown in FIG. 1.
FIG. 3 is a flowchart illustrating a process of providing anonymized event data by the event data management system illustrated in FIG. 1.
FIG. 4 is a flowchart illustrating a process of providing event data related to a specific vehicle by the event data management system illustrated in FIG. 1.

### DETAILED DESCRIPTION OF ILLUSTRATIVE EMBODIMENTS

Hereinafter, some embodiments of the present disclosure will be described in detail with reference to the accompanying drawings. It should be noted that, in adding reference numerals to the constituent elements in the respective drawings, like reference numerals designate like elements, although the elements are shown in different drawings. Further, in the following description of the present disclosure, a detailed description of known functions and configurations incorporated herein will be omitted when it may make the subject matter of the present disclosure rather unclear.

Additionally, various terms such as first, second, A, B, (a), (b), etc., are used solely for the purpose of differentiating one component from the other but neither imply nor suggest the substances, order or sequence of the components. Throughout this specification, when a part "includes" or "comprises" a component, the part may further include other components, and such other components are not excluded unless there is a particular description contrary thereto. Terms such as "unit," "module," and the like refer to units for processing at least one function or operation, which may be implemented by hardware, software, or a combination thereof.

According to at least some embodiments of the disclosure, event data recorded in each vehicle is stored and managed in a database on a network. Vehicle identifiable information, which allows a third party to identify or track a related vehicle or individual, is separated from the event data. The vehicle identifiable information and event data separated from each other are managed in different databases.

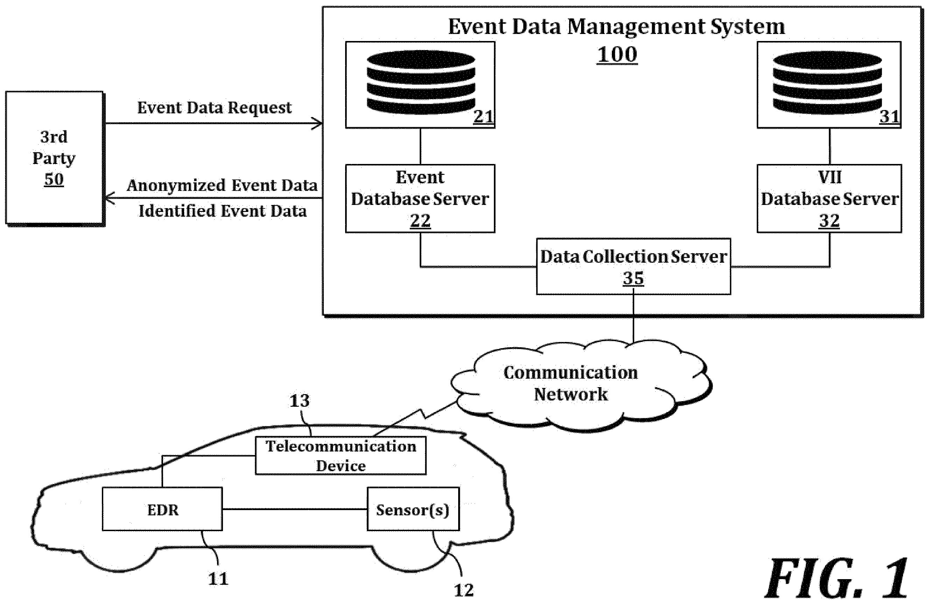

FIG. 1 is a diagram illustrating an entire system for storing and managing event data in a cloud-based manner according to an embodiment of the present disclosure.

An on-vehicle monitoring system may record data relating to the driving state of the vehicle, the operation by the driver, and the like within a predetermined period from a time before event occurrence time to a time after the event occurrence time. The on-vehicle monitoring system may wirelessly transmit the recorded data to a cloud-based event data management system 100.

The on-vehicle monitoring system may include an event data recorder (EDR) 11, at least one sensor 12, and a telecommunication device 13, which may be connected to a vehicle data bus (e.g., Controller Area Network (CAN), Local Interconnect Network (LIN), Medium Oriented Systems Transport (MOST), Ethernet, etc.).

The EDR 11 is designed to record and store, when occurrence of one or more predefined events is detected, data within a predetermined period from a time before the detection to a time after the detection. In particular, such an event may be a traffic collision. The traffic collision may be sensed, for example, when inflation of an airbag is triggered. In addition, the event may further include failure of a main function of the vehicle. The failure of the main function may be sensed, for example, when acceleration/deceleration occurs beyond a predefined threshold. The EDR 11 may be accessible to values measured by the at least one sensor 12. The at least one sensor 12 may be designed to sense the vehicle speed/deceleration/travel distance and the like. The data recorded by the EDR 11 may be data suitable for tracking traffic collisions, such as, for example, the dynamics of the vehicle, the driver's behavior, and the operating status of the vehicle safety system. The EDR 11 provides the recorded EDR data to the telecommunication device 13.

Upon receiving the EDR data from the EDR 11, the telecommunication device 13 may acquire the date, time, and geographic location of occurrence of the event from a positioning device (not shown), a time determination device (not shown), and the like. The positioning device may include a receiver configured to receive geographic location information and/or time information from a satellite assisted positioning system such as GPS or GNSS. The telecommunication device 13 may be configured to include a positioning device and/or a time determination device. Alternatively, the event data recorded by the EDR 11 may include the date, time, and geographic location of the triggered event.

The telecommunication device 13 is a wired or wireless telecommunication device that connects an in-vehicle network to an external communication network. The telecommunication device 13 may be, for example, a telematics unit (TMU), or a wired or wireless dongle plugged into the OBD-II port. The telecommunication device 13 may be configured to include a wireless transceiver capable of, for example, cellular communication such as GSM/WCDMA/LTE/5G or short-range wireless communication such as WLAN, c-V2X, WAVE, DSRC, and Bluetooth.

The communication device 13 may transmit an event report message to the event data management system 100 over a communication network. The event report message includes vehicle identifiable information (VII) and event data recorded before and after the event by the event data recorder 11. Here, the VII is information for uniquely identifying a vehicle, and may include, for example, a vehicle identification number (VIN), which may be collected from ECUs in the vehicle, a unique identifier used by the communication device 13 for communication, and a certificate (long-term or short-term certificate) assigned to the vehicle for V2X communication. Alternatively, personal identification information (e.g., social security number, driver's license number, etc.) by which an individual (i.e., an owner or driver of a vehicle) may be identified may be used in place of the VII.

In addition, the event report message may further contain additional information such as a geographical location, date, and time of the event, a vehicle model, the year of manufacture, a manufacturer, etc. At least a part of the additional information may be stored along with the event data in the event database 21, may be stored along with the VII in the VII database 31, or may be stored in both databases 21, 31.

The event data management system 100 may receive event report messages from multiple vehicles. To protect the privacy of individuals, the event data management system 100 performs de-identification processing on the event report message received from the vehicle, as described below, and then separate the VII, which allows a third party to identify or track the related vehicle or related individual, from the event data. The VII and the event data separated from each other are managed in different databases.

The event data management system 100 may include an event database 21, an event database server 22 configured to manage the event database 21, a VII database 31 and a VII database server 32 configured to manage the VII database 31. The event data management system 100 further includes a data collection server 35 communicatively coupled to the event database server 22 and the VII database server 32. While the event database server 22 and the VII database server 32 are illustrated in FIG. 1 as being distinguished as separate servers, these servers may be implemented by sharing computing resources through well-known virtualization techniques.

The data collection server 35 receives event report messages from multiple vehicles. The data collection server 35 may perform de-identification processing on the event report messages received from the vehicles to generate anonymized event data by which a third party cannot identify or track a related vehicle or individual. As described above, the event report message contains event data and VII.

The data collection server 35 may divide the information contained in the event report message into two data sets. One data set (a first data set) includes event data but does not include VII, and the other data set (a second data set) contains the VII but does not include the event data. That is, VIN data or any other unique data that allows identification or tracking of relevant vehicles or individuals of the event data is separated from the event data.

The data collection server 35 generates a pseudonymous identifier for the event data. The generated pseudonymous identifier is used to uniquely identify the relevant event data in the event database. However, it does not contain any meaningful information that identifies a vehicle or individual. The data collection server 35 delivers the first data set to which the pseudonymous identifier is added, that is, the anonymized event data, to the event database server 22.

In some embodiments, the pseudonymous identifier may be generated by applying a one-way hash algorithm to the VII (e.g., VIN data). The one-way hash algorithm makes it impossible to extract the VII or other useful information from the generated pseudonymous identifier. The pseudonymous identifier may be generated by applying the one-way hash algorithm to a combination of the VII and a random number generated by the data collection server 35. The random number used in generating the pseudonymous identifier may be securely managed in the data collection server 35 or stored in the VII database 31 along with related VII. Here, while the one-way hash algorithm has been described as an example, other types of cryptographic algorithms for generating anonymous identifiers may be used.

In another embodiment, the pseudonymous identifier may be generated by applying a one-way hash algorithm to a VII index used in uniquely identifying the VII in the VII database. To this end, the data collection server 35 may provide a second data set containing the VII to the event database server 22 and acquire the VII index from the event database server 22.

The event database server 22 may store the anonymized event data delivered from the data collection server 35 in the event database 21. As described above, the anonymized event data may be or include event data identified by a pseudonymous identifier.

The VII database server 32 may store the VII delivered from the data collection server 35 in the VII database 31. In the case where the pseudonymous identifier has been generated by applying the one-way hash algorithm to the combination of the VII and a random number, the VII database server 32 may store the VII and the random number delivered from the data collection server 35 in the VII database 31. As described above, the random numbers used to generate pseudonymous identifiers may not be provided to the VII database server 32.

As such, the privacy of an individual may be protected by use of an alias identifier. The pseudonymous identifier itself does not contain any meaningful information that identifies a vehicle or individual. However, the pseudonymous identifier may be cryptographically (re)generated based at least in part on the VII stored in the VII database 31. Thus, to further enhance protection of privacy of the individual, the data collection server 35 to generate a pseudonymous identifier is managed by an operator different from that of the event database server 22 or the VII database server 32, or the servers 22, 32 and 35 may be managed by different operators. In addition, the cryptographic algorithm or random numbers used to generate pseudonymous identifiers may be securely managed in relation to the operator(s) of the database servers 22 and 32.

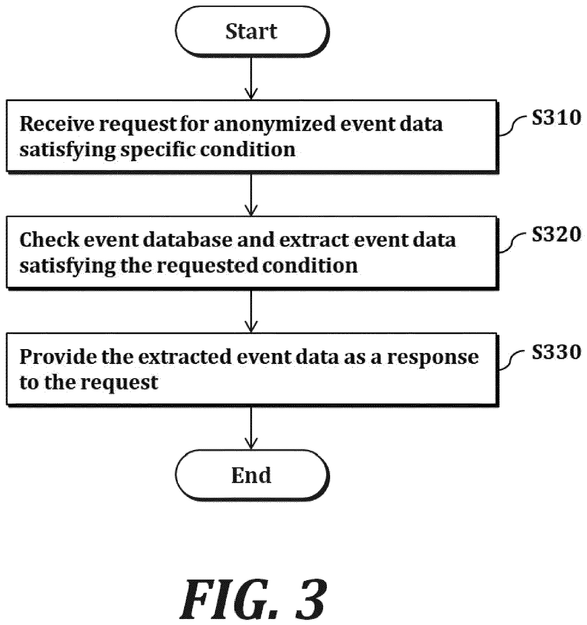

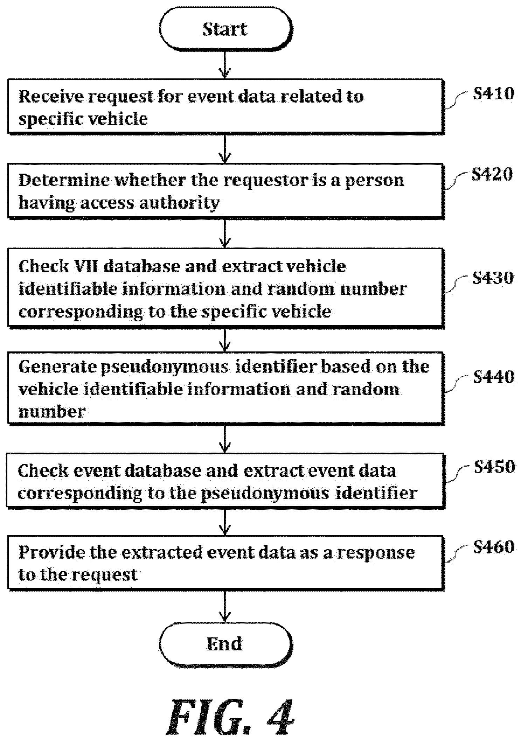

In response to a request from the third party 50, the event data management system 100 may provide anonymized event data for which a specific vehicle or individual is not identified or provide event data for which the specific vehicle or individual is identified. The third party 50 may be a service user who wants to utilize the event data, for example, an insurance company or a government agency, a researcher, a vehicle manufacturer, a vehicle owner, or the like. The third party 50 may specify a search condition such as a location of an event, a date of the event, a time of the event, a model of a vehicle involved, and a VIN. The event data management system 100 may use at least one of the event database server 22, the VII database server 32, and the data collection server 35 to extract event data specific to the request of the third party. A detailed process for providing the event data by the event data management system 100 will be described later with reference to FIGS. 3 and 4.

For further protection of the privacy of individuals, the VII database server 32 may further control access to data stored in the VII database 31 based on a preset access authorization policy. For example, the access authorization policy may only allow access by investigators or other users authorized by each vehicle owner unless otherwise authorized by court order, a search warrant and/or other applicable laws and regulations. In other words, the preset authorization policy may provide different levels of access for different users of the VII database 31. Similarly, the data collection server 35 may determine whether the requestor is a person having a legitimate authority before (re)generating a pseudonymous identifier to be used to retrieve event data associated with a specific vehicle from the event database 21.

On the other hand, the event database server 22 managing the anonymized event database 21 may use a less stringent access authorization policy than the VII database server 32. For example, the event database server 22 may use an access authorization policy that is based only on a billing system for third parties requesting anonymized event data. However, in the case where the event database server 22 receives a request for event data (i.e., identified event data) corresponding to a specific pseudonymous identifier, the event database server 22 may need to determine whether the requestor is a person having a legitimate authority.

In addition, a firewall may be used for the database servers 22 and 32 or database encryption techniques may be applied to the databases 21 and 31. In particular, to ensure secure management of the VII data, advanced security techniques may be adopted for the VII database server 32 and/or the VII database 31.

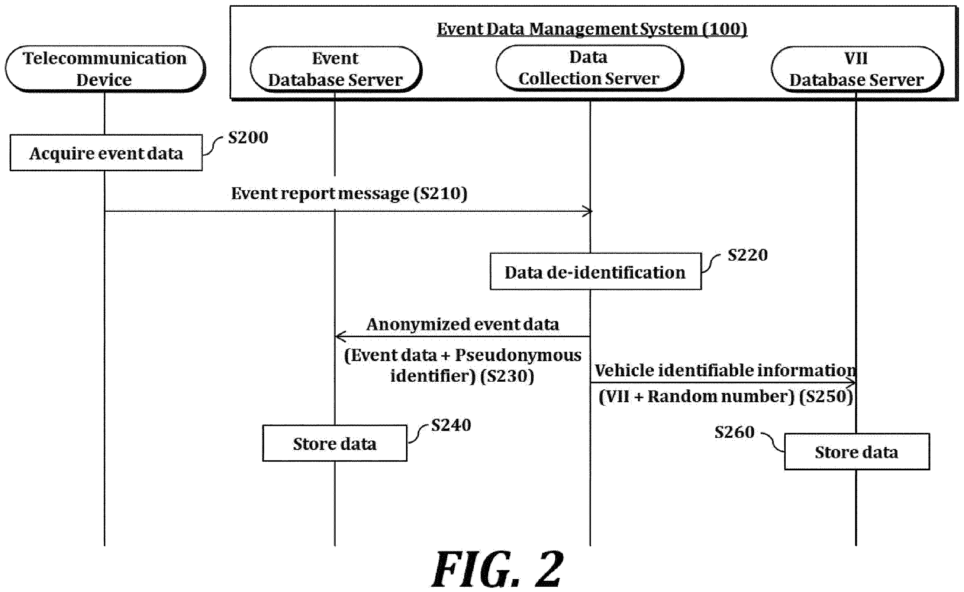

FIG. 2 is a flowchart illustrating an event data collection process of the system shown in FIG. 1.

First, a vehicle telecommunication device 13 acquires event related data from one or more modules, ECUs, components, and programs including the EDR 11 (S200). For example, the telecommunication device 13 may receive event data recorded before and after an event from the EDR 11 and collect the geographical location, date, and time of the event, an involved vehicle model, a VIN, etc.

The telecommunication device 13 wirelessly transmits an event report message containing the event data and VII to the data collection server 35 on a network (S210). As described above, the event report message may further contain additional information such as a geographical location, date, and time of the event, a vehicle model, the year of manufacture, a manufacturer, etc. In addition, the VII, which is information that may uniquely identify a vehicle, may include, for example, a VIN that may be collected from ECUs in the vehicle, and a unique Identifier that the communication device 13 uses for communication.

The data collection server 35 performs de-identification processing on the event report message received from the vehicle and generates anonymized event data by which a third party cannot identify or track the related vehicle or individual (220). As described above, the event report message includes event data and VII. The data collection server 35 may divide the information contained in the event report message into two data sets. One data set (a first data set) includes event data but does not include VII, and the other data set (a second data set) includes the VII but does not include the event data. The data collection server 35 generates a pseudonymous identifier for the event data.

The data collection server 35 delivers the first data set to which the pseudonymous identifier is added, that is, anonymized event data, to the event database server 22. The event database server 22 may store the anonymized event data delivered from the data collection server 35 in the event database 21. As described above, the anonymized event data may be or include event data identified by the pseudonymous identifier.

The data collection server 35 provides the second data set including the VII to the VII database server 32. The VII database server 32 may store the VII delivered from the data collection server 35 in the VII database 31. In the case where the pseudonymous identifier has been generated by applying the one-way hash algorithm to the combination of the VII and a random number, the VII database server 32 may store the VII and the random number delivered from the data collection server 35 in the VII database 31. As described above, the random numbers used to generate pseudonymous identifiers may not be provided to the VII database server 32.

FIG. 3 is a flowchart illustrating a process of providing anonymized event data by the event data management system illustrated in FIG. 1.

For example, the event data management system 100 may receive a request for anonymized event data that satisfies a specific condition, such as events that occurred in a specific area for a certain period of time, from government agency investigators or researchers (S310). The event data management system 100 may determine whether the requestor is a person having a legitimate authority before or after operation S310. The event data management system 100 may allow the event database server 22 to check the event database 21 and extract related event data (S320). In this example, the VII database 31 is not involved in extracting the event data. The event data management system 100 may provide the extracted event data as a response to the request (S330). As described above, since the association with the vehicle or the individual has been removed from the event data extracted only in dependence on the event database 21, provision of the extracted event data does not impair the privacy of the related vehicle owner.

FIG. 4 is a flowchart illustrating a process of providing event data related to a specific vehicle by the event data management system 100 illustrated in FIG. 1.

For example, the event data management system 100 may receive a request for event data related to a specific VIN from a vehicle owner, an insurance company, or an investigator of an investigative agency (S410).

The event data management system 100 may determine whether the requestor is a person having access authorized by a court order, a search warrant and/or other applicable laws and regulations or by a relevant vehicle owner (S420)

The VII database server 32 checks the VII database 31 and extracts VII corresponding to the VIN and a random number (S430). The data collection server 35 generates a pseudonymous identifier corresponding to the VIN based at least in part on the extracted VII and random number (S440). The event database server 22 checks the event database 21 and extracts event data corresponding to the generated pseudonymous identifier (S450). The event data management system 100 provides the extracted event data as a response to the request (S460).

When the operators operating the data collection server 35 and the event database 21 are different from each other, the pseudonymous identifier generated in operation S440 may be provided to the above-mentioned investigators or directly to the operator operating the event database 21 for use in checking the event database 21.

It should be understood that the example embodiments described above may be implemented in many different ways. In some examples, the various methods, apparatuses, servers, and (sub)systems described in this disclosure may be implemented by at least one general purpose computer having a processor, a memory, a disk or other mass storage, a communication interface, input/output (I/O) devices, and other peripherals. The general purpose computer may function as an apparatus to execute the methods described above by loading software instructions into the processor and then executing the instructions to perform the functions described in this disclosure.

The various methods described in this disclosure may be implemented with instructions stored on a non-transitory recording medium that can be read and executed by one or more processors. Non-transitory recording media include, for example, all types of recording devices in which data is stored in a form readable by a computer system. For example, the non-transitory recording media may include storage media such as an erasable programmable read only memory (EPROM), an electrically erasable programmable read-only memory (EPROM), a flash drive, an optical drive, a magnetic hard drive, and a solid state drive (SSD).

Although exemplary embodiments have been described for illustrative purposes, those skilled in the art will appreciate that and various modifications and changes are possible, without departing from the idea and scope of the embodiments. Exemplary embodiments have been described for the sake of brevity and clarity. Accordingly, one of ordinary skill would understand that the scope of the embodiments is not limited by the explicitly described above embodiments but is inclusive of the claims and equivalents thereto.

## Claims

1. A method for collecting and managing event data of a vehicle, the method performed by one or more computing systems, the method comprising:
receiving an event report message from the vehicle, the event report message containing vehicle identifiable information and event data recorded in the vehicle;
generating a pseudonymous identifier based on the vehicle identifiable information;
associating the event data with the pseudonymous identifier;
transmitting the event data to a first database server for storage in a first database; and
transmitting the vehicle identifiable information to a second database server for storage in a second database.

2. The method of claim 1, further comprising storing the event data in the first database and storing the vehicle identifiable information in the second database.

3. The method of claim 1 or 2, wherein the event report message further contains additional information related to a geographical location, date, or time of an event, the method further comprising storing the additional information in the first database or the second database.

4. The method of one of claims 1-3, wherein the first database and the second database are managed by different operators.

5. The method of one of claims 1-4, wherein the pseudonymous identifier is generated by applying a one-way hash algorithm to the vehicle identifiable information, wherein, optionally, the pseudonymous identifier is generated by applying a one-way hash algorithm to the vehicle identifiable information and a random number.

6. The method of claim 5, wherein the random number is associated with the vehicle identifiable information and stored in the second database, and/or wherein the random number is managed independently of the first database and the second database.

7. The method of one of claims 1-6, wherein the pseudonymous identifier is generated by applying a one-way hash algorithm to a vehicle identifiable information index that is used to uniquely identify the vehicle identifiable information in the second database.

8. The method of one of claims 1-7, wherein the event report message further contains additional information related to a geographical location, date, or time of an event.

9. The method of one of claims 1-8, wherein the first database server and the second database server are managed by different operators.

10. A system for collecting and managing event data, the system comprising:
a first database;
a first database server configured to manage the first database;
a second database;
a second database server configured to manage the second database; and
a data collection server communicatively coupled to the first database server and the second database server;
wherein the data collection server is configured to receive an event report message from a vehicle, the event report message containing vehicle identifiable information and event data recorded in the vehicle, the data collection server further configured to generate a pseudonymous identifier based on the vehicle identifiable information;
wherein the first database server is configured to associate the event data with the pseudonymous identifier and to store the event data in a first database; and
wherein the second database server is configured to store the vehicle identifiable information in a second database.

11. The system of claim 10, wherein the data collection server is configured to generate the pseudonymous identifier by applying a one-way hash algorithm to the vehicle identifiable information, wherein, optionally, the data collection server is configured to generate the pseudonymous identifier by applying a one-way hash algorithm to the vehicle identifiable information and a random number.

12. The system of claim 11, wherein the data collection server is configured to securely store the random number at the data collection server, and/or wherein the data collection server is configured to provide the random number to the second database server such that the random number is associated with the vehicle identifiable information and stored in the second database.

13. The system of one of claims 10-12, wherein the data collection server is configured to generate the pseudonymous identifier by applying a one-way hash algorithm to a vehicle identifiable information index that is used to uniquely identify the vehicle identifiable information in the second database.

14. The system of one of claims 10-13, wherein the event report message further contains additional information related to a geographical location, date, or time of an event, wherein, optionally, the additional information is stored in the first database or the second database.

15. The system of one of claims 10-14, wherein at least some of the data collection server, the first database server, and the second database server are operated by different operators.
